# EUROPÄISCHE PATENTSCHRIFT

(11) **EP 3 596 428 B1**
(45) Veröffentlichungstag und Bekanntmachung des Hinweises auf die Patenterteilung: **19.05.2021**
(21) Anmeldenummer: 18711544.9
(22) Anmeldetag: 14.03.2018
(51) Int. Cl.: G01C 21/32

(54) **VERFAHREN UND VORRICHTUNG ZUM AKTUALISIEREN EINER DIGITALEN KARTE ZUR FAHRZEUGNAVIGATION**
METHOD AND DEVICE FOR UPDATING A DIGITAL MAP FOR VEHICLE NAVIGATION
PROCÉDÉ ET DISPOSITIF DE MISE À JOUR D'UNE CARTE DIGITALLE POUR LA NAVIGATION DE VÉHICULE

(30) Priorität: 16.03.2017 DE 102017204357
(43) Veröffentlichungstag der Anmeldung: 22.01.2020
(73) Patentinhaber: Robert Bosch GmbH, 70442 Stuttgart (DE)
(72) Erfinder: MIELENZ, Holger, 73760 Ostfildern (DE); SKUPIN, Christian, 30823 Garbsen (DE); LANGENBERG, Markus, 30559 Hannover (DE); MARX, Jochen, 31180 Emmerke (DE); KNORR, Moritz Michael, 31139 Hildesheim (DE); KLEJNOWSKI, Lukas, 31303 Burgdorf (DE); GERALDY, Alexander, 31141 Hildesheim (DE); ZAUM, Daniel, 31157 Sarstedt (DE); PAGEL, Michael, 75378 Bad Liebenzell (DE); HINTERLEITNER, Isabella, 31137 Hildesheim (DE); HOMANN, Hanno, 30629 Hannover (DE); CAKAR, Emre, 30559 Hannover (DE)
(86) Internationale Anmeldenummer: PCT/EP2018/056425
(87) Internationale Veröffentlichungsnummer: WO 2018/167164

(56) Entgegenhaltungen:
- DE-A1-102006 061 390
- DE-A1-102015 014 191

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Zur Fahrzeugnavigation werden digitale Karten eingesetzt.

### Stand der Technik

Die DE 10 2015 014191 A1 offenbart ein Verfahren zur Überprüfung einer digitalen Karte.

Die DE 10 2006 061390 A1 offenbart ein Umfelderfassungssystem eines Kraftfahrzeugs mit einer Sensorik zum Erfassen von Messsignalen, die Informationen über Objekte im Umfeld des Kraftfahrzeugs liefern.

### Offenbarung der Erfindung

Vor diesem Hintergrund werden mit dem hier vorgestellten Ansatz ein Verfahren zum Aktualisieren einer digitalen Karte zur Fahrzeugnavigation, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Wenn ein Sensor eines Fahrzeugs so eingestellt wird, dass der Sensor einen speziell einen solchen Abschnitt im Umfeld des Fahrzeugs erfasst, der einem zu aktualisierenden Bereich einer digitalen Karte entspricht, so kann das der digitalen Karte zugrunde liegende Kartenmaterial sehr zielgerichtet aktualisiert werden.

Ein Verfahren zum Aktualisieren einer digitalen Karte zur Fahrzeugnavigation umfasst die folgenden Schritte:
Bestimmen eines Einstellsignals zum Einstellen eines Erfassungsbereichs eines Umfeldsensors eines Fahrzeugs auf einen einem zu aktualisierenden Bereich der digitalen Karte entsprechenden Abschnitt einer Umgebung des Fahrzeugs, unter Verwendung einer Information über den zu aktualisierenden Bereich, wobei das Einstellsignal bestimmt wird, um einen Öffnungswinkel des Umfeldsensors einzustellen.
   Einlesen eines Aktualisierungssignals, das die Information über den zu aktualisierenden Bereich der digitalen Karte (102) umfasst, über eine Schnittstelle zu einer fahrzeugexternen Verwaltungseinrichtung zum Verwalten der digitalen Karte; und
Bereitstellen von Bereichsdaten zum Aktualisieren der digitalen Karte, wobei die Bereichsdaten ein von dem Sensor erfasstes Abbild des Abschnitts der Umgebung repräsentieren, wobei die Bereichsdaten an die Schnittstelle zu der fahrzeugexternen Verwaltungseinrichtung bereitgestellt werden.

Die digitale Karte kann in digitaler Form vorliegendes Kartenmaterial umfassen, das beispielsweise von einem Navigationssystem oder einem Fahrzeugassistenzsystem eines Fahrzeugs verwendet werden kann. Bei dem Fahrzeug kann es sich um ein Straßenfahrzeug, beispielsweise einen Personenkraftwagen handeln. Der zu aktualisierende Bereich kann einen Bereich der digitalen Karte definieren, in dem das Kartenmaterial veraltet oder nicht vorhanden ist und durch Bereichsdaten aktualisiert werden soll, die von einem Sensor erfasst werden können. Dabei handelt es sich um einen Umfeldsensor eines Fahrzeugs, der verwendet wird, um das Umfeld des Fahrzeugs zu erfassen. Der zu aktualisierende Bereich kann beispielsweise durch Koordinaten eines der digitalen Karte zugrunde liegenden Koordinatensystems definiert sein. Bei dem Sensor kann es sich um einen Sensor mit einstellbarer Reichweite und/oder einstellbaren Öffnungswinkel handeln. Bei dem Einstellsignal kann es sich um ein zum Einstellen zumindest eines Einstellparameters des Sensors geeignetes Signal handeln. Der Einstellparameter kann beispielsweise zum Einstellen des Öffnungswinkels, einer Erfassungsrichtung oder der Reichweite des Sensors verwendet werden. Die Bereichsdaten können von dem Sensor bereitgestellte Rohsensordaten oder bereits nachbearbeitete Sensordaten darstellen.

Das Verfahren umfasst einen Schritt des Einlesens eines Aktualisierungssignals, das die Information über den zu aktualisierenden Bereich der digitalen Karte umfasst. Das Aktualisierungssignal kann von einer Einrichtung bereitgestellt werden, die das der digitalen Karte zugrundeliegende Kartenmaterial verwaltet. Auf diese Weise kann die Information über den zu aktualisierenden Bereich an Fahrzeuge übertragen werden, die zum Erfassen der Bereichsdaten geeignet sind.

Im Schritt des Einlesens wird das Aktualisierungssignal über eine Schnittstelle zu einer fahrzeugexternen Verwaltungseinrichtung zum Verwalten der digitalen Karte eingelesen. Auf diese Weise kann ein Backendserver zum zentralen Aussenden des Aktualisierungssignals verwendet werden. Ferner werden die Bereichsdaten an die Schnittstelle zu der fahrzeugexternen Verwaltungseinrichtung bereitgestellt. Auf diese Weise kann die digitale Karte zentral verwaltet werden.

In einem Schritt des Auswählens kann der Sensor unter Verwendung des Aktualisierungssignals ausgewählt werden. Auf diese Weise kann aus mehreren im Fahrzeug verfügbaren Sensoren derjenige ausgewählt werden, der am besten zum Erfassen des relevanten Abschnitts der Umgebung des Fahrzeugs geeignet ist.

Das Verfahren kann einen Schritt des Überprüfens umfassen, in dem eine Verwendung des Sensors durch ein Fahrzeugassistenzsystem überprüft wird. Dabei kann eine aktuelle und/oder eine bevorstehende Verwendung des Sensors überprüft werden. Wenn der Sensor durch zumindest ein Fahrzeugassistenzsystem des Fahrzeugs benötigt wird, so kann dieser Sensor von der Erfassung der Bereichsdaten ausgeschlossen werden. Wir der Sensor dagegen nicht benötigt, so kann der Sensor zum Erfassen der Bereichsdaten zur Verfügung gestellt werden. Somit kann das Einstellsignal abhängig von einem Ergebnis des Schritt des Überprüfens durchgeführt werden oder nicht durchgeführt werden.

Das Einstellsignal wird bestimmt, um einen Öffnungswinkel des Sensors einzustellen. Durch den Öffnungswinkel kann definiert werden, ob durch den Sensor ein naheliegender Abschnitt der Umgebung oder eine entfernt liegender Abschnitt der Umgebung erfasst wird.

Der Schritt des Bestimmens des Einstellsignals kann unter Verwendung eines eine Position und eine Ausrichtung des Fahrzeugs anzeigenden Positionssignals durchgeführt werden. Auf diese Weise kann sichergestellt werden, dass von dem Sensor tatsächlich der Abschnitt der Umgebung des Fahrzeugs erfasst wird, der dem zu aktualisierenden Bereich der digitalen Karte entspricht.

Das Verfahren kann einen Schritt des Erfassens der Bereichsdaten unter Verwendung des Sensors umfassen. Vorteilhafterweise kann somit ein ohnehin am Fahrzeug verbauter Sensor, beispielsweise eine Kamera oder ein Radarsensor zum Aktualisieren der digitalen Karte eingesetzt werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung einer Vorrichtung zum Aktualisieren einer digitalen Karte zur Fahrzeugnavigation gemäß einem Ausführungsbeispiel; und
Fig. 2 ein Ablaufdiagramm eines Verfahrens zum Aktualisieren einer digitalen Karte zur Fahrzeugnavigation gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

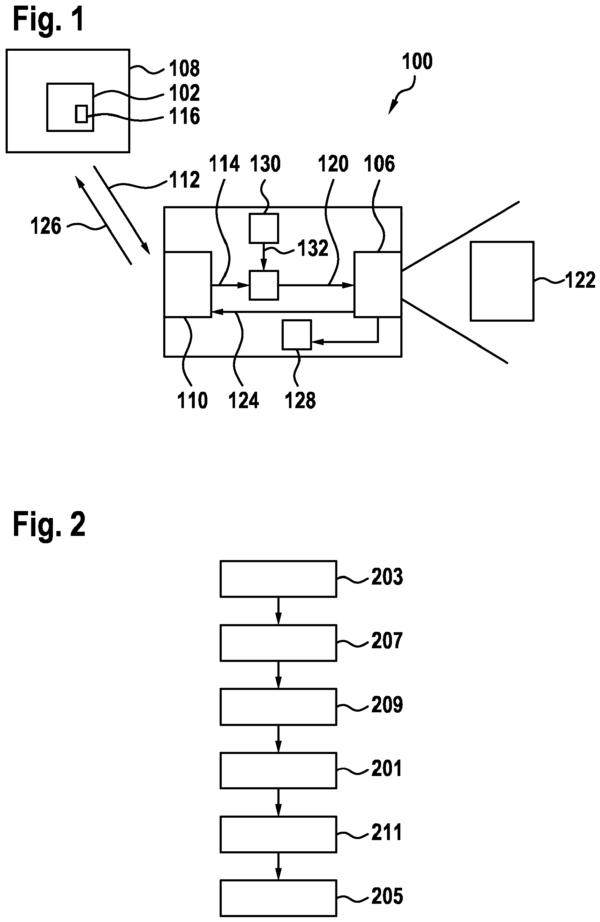

Fig. 1 zeigt eine schematische Darstellung einer Vorrichtung 100 zum Aktualisieren einer digitalen Karte 102 gemäß einem Ausführungsbeispiel.

Gezeigt ist ein Fahrzeug 104 mit einem Sensor 106, der gemäß diesem Ausführungsbeispiel verwendet wird, um die digitale Karte 102 zu aktualisieren. Die digitale Karte 102 oder der digitalen Karte 102 zugrundeliegendes Kartenmaterial ist gemäß diesem Ausführungsbeispiel in einer fahrzeugexternen Verwaltungseinrichtung 108, beispielsweise in Form eines Servers, gespeichert.

Die Vorrichtung 100 umfasst eine Einleseeinrichtung 110, die ausgebildet ist, um ein Aktualisierungssignal 112 einzulesen, das eine Information 114 über einen zu aktualisierenden Bereich 116 der digitalen Karte 102 umfasst. Gemäß diesem Ausführungsbeispiel wird das Aktualisierungssignal 112 drahtlos an das Fahrzeug 104 übertragen. Die Einleseeinrichtung 110 ist ausgebildet, um die Information 114 über den zu aktualisierenden Bereich 116 aus dem Aktualisierungssignal 112 zu extrahieren und an eine Bestimmungseinrichtung 118 bereitzustellen. Die Bestimmungseinrichtung 118 ist ausgebildet, um unter Verwendung der Information 114 ein Einstellsignal 120 zu bestimmen, das geeignet ist, um einen Erfassungsbereich des Umfeldsensors 106 so einzustellen, dass von dem Umfeldsensor 106 ein Abschnitt 122 der Umgebung des Fahrzeugs 104 erfasst und abgebildet wird, der dem zu aktualisierenden Bereich 116 der digitalen Karte 102 entspricht. Der Umfeldsensor 106 oder eine mit dem Umfeldsensor 106 gekoppelte Bereitstellungseinrichtung ist ausgebildet, um Bereichsdaten 124 zum Aktualisieren der digitalen Karte 102 bereitzustellen. Dabei umfassen die Bereichsdaten 124 ein von dem Sensor 106 erfasstes Abbild des Abschnitts 122 der Umgebung des Fahrzeugs 104. Gemäß diesem Ausführungsbeispiel werden die Bereichsdaten 124 oder ein die Bereichsdaten 124 oder davon abgeleitete Daten umfassendes Signal 126 über eine Schnittstelle des Fahrzeugs 104 an die Verwaltungseinrichtung 108 ausgesendet und von der Verwaltungseinrichtung 108 zur Aktualisierung des zu aktualisierenden Bereichs 116 der digitalen Karte 102 verwendet.

Gemäß einem Ausführungsbeispiel umfasst die Vorrichtung 100 lediglich die Bestimmungseinrichtung 118 und eine sensorinterne oder sensorexterne Bereitstellungseinrichtung zum Bereitstellen der Bereichsdaten 124. Gemäß weiteren Ausführungsbeispielen umfasst die Vorrichtung 100 ferner die Einleseeinrichtung 110, und/oder den Sensor 106 und/oder die Verwaltungseinrichtung 108. Das Fahrzeug 104 kann neben dem Sensor 106 weitere Sensoren umfassen, die zusätzlich oder alternativ zu dem Sensor 106 eingesetzt werde können, um die Bereichsdaten 124 zu ermitteln.

Gemäß einem Ausführungsbeispiel umfasst das Fahrzeug 104 ein Fahrzeugassistenzsystem 128, das von dem Umfeldsensor 106 bereitgestellte Daten verwendet, beispielsweise um eine Fahraufgabe zu erledigen. Gemäß einem Ausführungsbeispiel weist die Vorrichtung 100 eine Überprüfungseinrichtung auf, die ausgebildet, um zu überprüfen, ob der Umfeldsensor 106 aktuell oder zu einem Zeitpunkt, an dem der Abschnitt 122 in den Erfassungsbereich des Umfeldsensors 106 gelangt, von dem Fahrzeugassistenzsystem 128 verwendet wird. Wenn eine solche Verwendung vorliegt, ist die Einstelleinrichtung 118 ausgebildet, um das Einstellsignal 120 nicht zu bestimmen oder zumindest nicht bereitzustellen, um den Betrieb des Fahrzeugassistenzsystems 128 nicht zu beeinträchtigen.

Gemäß einem Ausführungsbeispiel umfasst das Fahrzeugs 104 eine Positionsbestimmungseinrichtung 130, die ausgebildet ist, um ein Positionssignal 132 an die Einstelleinrichtung 118 bereitzustellen, das Daten bezüglich einer Position und Fahrtrichtung oder Ausrichtung des Fahrzeugs 104 umfasst. Die Einstelleinrichtung 118 ist ausgebildet, um das Einstellsignal 120 unter Verwendung des Positionssignals 132 zu bestimmen. Das Positionssignal 132 kann von der Einstelleinrichtung 118 verwendet werden, um abzuschätzen, wann und auf welche Weise der Abschnitt 122 von dem Umfeldsensor 106 erfasst werden kann.

Im folgenden wird ein Ausführungsbeispiel näher beschrieben, bei dem der beschriebene Ansatz für hoch- und vollautomatisierte Systeme eingesetzt wird. Dabei wird eine Verwaltungseinrichtung 108 eingesetzt, die in Form eines Backendservers 108, auch kurz als Backend bezeichnet, ausgeführt ist. Dabei erfolgt die Kommunikation des Backendservers 108 mit Fahrzeugen, wie das gezeigte Fahrzeug 104, zur gezielten Aktualisierung bestimmter Kartenbereiche 116 mittels einem variablen Field of View (FoV) der zumindest den Sensor 106 umfassenden Sensorik des Fahrzeugs 104. Die Field of View wird gemäß einem Ausführungsbeispiel durch die Reichweite und den Öffnungswinkel des Sensors 106 definiert.

Systeme zur Automatisierung der Fahrzeugführung können anhand Ihres Grads in unterschiedliche Stufen - von manuell bis vollautomatisiert (siehe BASt-Klassifikation) - eingeteilt werden. Die Stufe der "Teilautomatisierung" ist dadurch gekennzeichnet, dass das System sowohl die Längs- als auch Querregelung in bestimmten Situationen und für einen gewissen Zeitraum übernehmen kann. Der Fahrer muss das System dabei dauerhaft überwachen und jederzeit zur vollständigen Übernahme der Fahrzeugführung bereit sein. Vollautomatisierte Systeme sind dadurch gekennzeichnet, dass das Fahrzeug selbstständig und ohne Einwirkung des Fahrers fährt.

Zur Lokalisierung und zur Situationsanalyse benötigen vollautomatisierte Systeme eine detaillierte Karte 102 ihrer Umgebung, die z.B. auf dem Backendserver 108 gespeichert ist und von den Fahrzeugen 104 bei Bedarf abgerufen werden kann. Um zuverlässiges und sicheres Fahren zu ermöglichen, soll diese Karte 102 jedoch immer auf aktuellem Stand gehalten werden. Zur Kartenerstellung ist es gemäß dem hier beschriebenen Ansatz vorteilhafterweise nicht mehr erforderlich, das ein mit spezieller Referenzsensorik ausgestattetes Fahrzeug die Strecke mehrmals abfährt, um Daten aufzunehmen, aus denen dann die Karte 102 generiert wird. Da dieser Prozess der Kartenerstellung sehr aufwändig und teuer ist, wird für gemäß dem hier beschriebenen Ansatz eine andere Lösung genutzt.

Nach Versorgung der Fahrzeuge 104 mit einer initialen Karte 102, beispielsweise aufgenommen mit einer Referenzsensorik, werden die fahrzeugeigenen Sensoren 106, die beispielsweise als Radarsensor, Lidarsensor, Videosensor und/oder Ultraschallsensor ausgeführt sein können, benutzt, um Abweichungen der Umgebung zur Karte 102 festzustellen. Diese Abweichungen werden auf das Backend 108 geladen und dort benutzt, um die Karte 102 zu aktualisieren. Dabei wird die Möglichkeit von Sensorgenerationen genutzt, die den Field-of-View, also die Reichweite und den Öffnungswinkel gezielt anpassen können und somit durch Fokussierung auf bestimmte Bereiche eine höhere Informationsdichte erhalten zu können.

Die vorliegende Erfindung beschreibt ein Verfahren, mit dem das Backend 108 Fahrzeuge 104 gezielt anweisen kann, mit der Fahrzeugsensorik 106 Informationen 124 über bestimmte Bereiche 122 des Fahrzeugumfelds zu ermitteln. Dabei wird insbesondere die Fähigkeit derjenigen Sensoren 106 genutzt, die in der Lage sind, ihren Field-of-View variabel und stufenlos zu verstellen.

Mit dem hier beschriebenen Ansatz wird einem Backendserver 108, der Karten 102 für hochautomatisiertes Fahren zur Verfügung stellt, die Möglichkeit gegeben, gezielt Fahrzeuge 104 anzuweisen, wenn möglich Informationen über bestimmte Bereiche im Umfeld des Fahrzeugs 104 zu sammeln. Die Karte 102 kann dadurch über die auf der Straße befindliche Fahrzeugflotte aktuell gehalten werden. Eine teure Aktualisierung über Referenzfahrzeuge kann somit entfallen.

Vorteilhafterweise bietet der beschriebene Ansatz die Möglichkeit, für die aktuelle Fahrhandlung ungenutzte Sensoren 106 gezielt anzuweisen, ihren Field-of-View derart anzupassen, dass Bereiche 122 ausgeleuchtet werden, über die weitere Informationen benötigt werden.

Dabei können sowohl Sensoren 106 eingesetzt werden, die nur eingeschränkt die Möglichkeit bieten, ihren Field-of-View, d.h. Reichweite und Öffnungswinkel, zu verändern, und zum anderen Sensoren 106 eingesetzt werden, die die Möglichkeit bieten, ihren Field-of-View variabel und stufenlos anzupassen.

Für die meisten Fahrhandlungen werden nicht die Informationen aller Umfeldsensoren 106 benötigt. So sind bei einem Fahrzeug 104, das an jeder Ecke mit einem Radarsensor 106 ausgestattet ist, bei einem Spurwechsel nur die Informationen von den auf einer Seite liegenden Radarsensoren wichtig. Das Backend 108 kann nun nicht genutzte Sensoren 106 gezielt anweisen, ihren Field-of-View derart einzustellen, dass Bereiche 122 ausgeleuchtet werden, über die weitere Informationen benötigt werden. So kann bei Radarsensoren 106 z.B. durch Verringerung des Öffnungswinkels ein Bereich 122 in größerer Entfernung ausgeleuchtet werden. Sind Informationen aus dem Nahbereich von Interesse, kann der Radarsensor 106 angewiesen werden, einen möglichst breiten Öffnungswinkel auszuleuchten.

Das Backend 108 teilt dem Fahrzeug 104 mit, über welche Bereiche 122 der aktuellen Route weitere Informationen benötigt werden. Das Fahrzeug 104 entscheidet dann selber, ausgehend von der aktuellen Fahrhandlung und der Anzahl bzw. Position der gerade ungenutzten Sensoren 106, ob die Möglichkeit besteht, gezielt Informationen über diese Bereiche 122 zu erhalten. Ist dies der Fall, werden die Daten 124 an das Backend übermittelt und dort für eine Aktualisierung der Karte 102 verwendet.

Fig. 2 zeigt ein Ablaufdiagramm eines Verfahrens zum Aktualisieren einer digitalen Karte zur Fahrzeugnavigation gemäß einem Ausführungsbeispiel. Das Verfahren kann unter Verwendung der oder einiger der anhand von Fig. 1 beschriebenen Einrichtungen durchgeführt werden.

In einem Schritt 201 wird ein Einstellsignal bestimmt, das geeignet ist, um einen Erfassungsbereich eines Umfeldsensors eines Fahrzeugs auf einen Abschnitt einer Umgebung eines Fahrzeugs einzustellen, der einem zu aktualisierenden Bereich der digitalen Karte entspricht. Dabei wird eine Information über den zu aktualisierenden Bereich verwendet. Optional wird die Information in einem Schritt 203 in Form eines die Information umfassenden Aktualisierungssignals eingelesen. In einem Schritt 205 werden basierend auf einem von dem Umfeldsensor erfassten Abbilds des Abschnitts der Umgebung Bereichsdaten bereitgestellt, die zum Aktualisieren der digitalen Karte verwendbar sind.

Optional wird die Information über den zu aktualisierenden Bereich in einem Schritt 207 verwendet, um einen geeigneten Umfeldsensor aus einer Mehrzahl von Sensoren des Fahrzeugs auszuwählen. Ebenfalls optional wird in einem Schritt 209 überprüft, ob der Umfeldsensor von einem Fahrzeugassistenzsystem benötigt wird. Abhängig davon, ob der Umfeldsensor benötigt wird oder nicht, wird dann der Schritt 201 des Bestimmens des Einstellsignals ausgeführt oder nicht ausgeführt.

Gemäß einem Ausführungsbeispiel umfasst das Verfahren ferner einen Schritt 211, in dem die im Schritt 205 bereitgestellten Bereichsdaten unter Verwendung des Umfeldsensors erfasst werden.

## Patentansprüche

1. Verfahren zum Aktualisieren einer digitalen Karte (102) zur Fahrzeugnavigation, wobei das Verfahren die folgenden Schritte umfasst:
Bestimmen (201) eines Einstellsignals (120) zum Einstellen eines Erfassungsbereichs eines Umfeldsensors (106) eines Fahrzeugs (104) auf einen einem zu aktualisierenden Bereich (116) der digitalen Karte (102) entsprechenden Abschnitt (122) einer Umgebung des Fahrzeugs (104), unter Verwendung einer Information (114) über den zu aktualisierenden Bereich (116), wobei das Einstellsignal (120) bestimmt wird, um einen Öffnungswinkel des Umfeldsensors (106) einzustellen.
Einlesen (203) eines Aktualisierungssignals (112), das die Information (114) über den zu aktualisierenden Bereich (116) der digitalen Karte (102) umfasst, über eine Schnittstelle (110) zu einer fahrzeugexternen Verwaltungseinrichtung (108) zum Verwalten der digitalen Karte (102); und
Bereitstellen (205) von Bereichsdaten (124) zum Aktualisieren der digitalen Karte (102), wobei die Bereichsdaten (124) ein von dem Umfeldsensor (106) erfasstes Abbild des Abschnitts (122) der Umgebung repräsentieren, wobei die Bereichsdaten (124) an die Schnittstelle (110) zu der fahrzeugexternen Verwaltungseinrichtung (108) bereitgestellt werden.

2. Verfahren gemäß einem der vorangegangenen Ansprüche, mit einem Schritt (207) des Auswählens des Umfeldsensors (106) unter Verwendung der Information (114) über den zu aktualisierenden Bereich (116).

3. Verfahren gemäß einem der vorangegangenen Ansprüche, mit einem Schritt (209) des Überprüfens einer Verwendung des Umfeldsensors (106) durch ein Fahrzeugassistenzsystem (128), wobei der Schritt (201) des Bestimmens des Einstellsignals (120) abhängig von einem Ergebnis des Schritts (209) des Überprüfens durchgeführt wird.

4. Verfahren gemäß einem der vorangegangenen Ansprüche, bei dem der Schritt (201) des Bestimmens des Einstellsignals (120) unter Verwendung eines eine Position und eine Ausrichtung des Fahrzeugs (104) anzeigenden Positionssignals (132) durchgeführt wird.

5. Verfahren gemäß einem der vorangegangenen Ansprüche, mit einem Schritt (211) des Erfassens der Bereichsdaten (124) unter Verwendung des Umfeldsensors (106).

6. Vorrichtung (100) zum Aktualisieren einer digitalen Karte (102) zur Fahrzeugnavigation, die eingerichtet ist, um die Schritte des Verfahrens gemäß einem der vorangegangenen Ansprüche in entsprechenden Einheiten auszuführen.

7. Computerprogramm, das dazu eingerichtet ist, das Verfahren gemäß einem der Ansprüche 1-5 auszuführen.

8. Maschinenlesbares Speichermedium, auf dem das Computerprogramm nach Anspruch 7 gespeichert ist.

## Claims

1. Method for updating a digital map (102) for vehicle navigation, wherein the method comprises the following steps:
Determining (201) a setting signal (120) for setting a capture area of a surroundings sensor (106) of a vehicle (104) to a section (122) of a surrounding region of the vehicle (104) corresponding to an area (116) of the digital map (102) to be updated, using an item of information (114) about the area (116) to be updated, wherein the setting signal (120) is determined so as to set an aperture angle of the surroundings sensor (106).
Inputting (203) an update signal (112) that comprises the information (114) about the area (116) of the digital map (102) to be updated, via an interface (110) with a management device (108) external to the vehicle for managing the digital map (102); and
Providing (205) area data (124) for updating the digital map (102), wherein the area data (124) represent an image of the section (122) of the surrounding region captured by the surroundings sensor (106), wherein the area data (124) are provided to the interface (110) with the management device (108) external to the vehicle.

2. Method according to one of the preceding claims, with a step (207) of selecting the surroundings sensor (106) using the information (114) about the area (116) to be updated.

3. Method according to one of the preceding claims, with a step (209) of checking a use of the surroundings sensor (106) by means of a vehicle assistance system (128), wherein the step (201) of determining the setting signal (120) is carried out depending on a result of the checking step (209).

4. Method according to one of the preceding claims, in which the step (201) of determining the setting signal (120) is carried out using a position signal (132) indicating a position and an orientation of the vehicle (104) .

5. Method according to one of the preceding claims, with a step (211) of capturing the area data (124) using the surroundings sensor (106).

6. Device (100) for updating a digital map (102) for vehicle navigation, configured to carry out the steps of the method according to one of the preceding claims in corresponding units.

7. Computer program configured to carry out the method according to one of Claims 1-5.

8. Machine-readable storage medium on which the computer program according to Claim 7 is stored.

## Revendications

1. Procédé de mise à jour d'une carte numérique (102) pour la navigation d'un véhicule, le procédé comprenant les étapes suivantes consistant à :
déterminer (201) un signal de réglage (120) permettant de régler une zone de détection d'un capteur d'environnement (106) d'un véhicule (104) sur une partie (122) d'un environnement du véhicule (104) correspondant à une zone (116) à mettre à jour de la carte numérique (102) en utilisant une information (114) concernant la zone à mettre à jour (116), le signal de réglage (120) étant déterminé pour régler un angle d'ouverture du capteur d'environnement (106),
lire (203) un signal de mise à jour (112) qui comprend l'information (114) concernant la zone à mettre à jour (116) de la carte numérique (102), par l'intermédiaire d'une interface (110) avec un dispositif de gestion (108) externe au véhicule et permettant de gérer la carte numérique (102) ; et
fournir (205) des données de zone (124) permettant de mettre à jour la carte numérique (102), les données de zone (124) représentant une image de la partie (122) de l'environnement, détectée par le capteur d'environnement (106), les données de zone (124) étant fournies au niveau de l'interface (110) avec le dispositif de gestion (108) externe au véhicule.

2. Procédé selon l'une quelconque des revendications précédentes, comprenant une étape (207) de sélection du capteur d'environnement (106) en utilisant l'information (114) concernant la zone à mettre à jour (116) .

3. Procédé selon l'une quelconque des revendications précédentes, comprenant une étape (209) de vérification d'une utilisation du capteur d'environnement (106) par un système d'assistance au conducteur (128), l'étape (201) de détermination du signal de réglage (120) étant effectuée en fonction d'un résultat de l'étape (209) de vérification.

4. Procédé selon l'une quelconque des revendications précédentes, dans lequel l'étape (201) de détermination du signal de réglage (120) est effectuée en utilisant un signal de position (132) indiquant une position et une orientation du véhicule (104).

5. Procédé selon l'une quelconque des revendications précédentes, comprenant une étape (211) de détection des données de zone (124) en utilisant le capteur d'environnement (106).

6. Dispositif (100) de mise à jour d'une carte numérique (102) pour la navigation d'un véhicule, qui est aménagé pour effectuer le procédé selon l'une quelconque des revendications précédentes dans des unités correspondantes.

7. Programme informatique qui est aménagé pour effectuer le procédé selon l'une quelconque des revendications 1 à 5.

8. Support de stockage lisible par machine sur lequel est stocké le programme informatique selon la revendication 7.
